# EUROPEAN PATENT APPLICATION

(11) **EP 0 712 723 A2**
(43) Date of publication of application: **22.05.1996**
(21) Application number: 95202751.4
(22) Date of filing: 12.10.1995
(51) Int. Cl.: B41B 19/00, B41B 21/26, G06K 15/12

(54) **Method and apparatus for multibeam scanning**

(30) Priority: 27.10.1994 US 330042
(71) Applicant: Bayer Corporation, Pittsburgh, PA 15219-2502 (US)
(72) Inventor: Goulet, Ronald G., Nashua, NH 03063 (US); Bellemore, Arthur J., Chelmsford, MA 01824 (US); Larsen, David B., Woburn, MA 01801 (US)
(74) Representative: Ramon, Charles Lucien

(57) **Abstract**

A rotating multibeam imaging unit (**140**) contains a plurality of image sources fixed within it such that the radiation emitted from the sources is shaped and directed to a writing surface (**114**) fixed inside a beam-scanning imagesetter (**100**), without the crossing of the projected multiple beams (**150**). Control of the rotating multibeam imaging unit (**140**) and of the radiation emitted by the image sources makes use of a communication link (**182**) which can be used for transmission to the unit of power, control information, and beam modulation data, and can be bi-directional to provide status information for closed loop operation. The rotating multibeam imaging unit (**140**) can include an internal power source such as a battery and/or a generator driven by the rotation of the unit. The communication link (**182**) can be implemented with or without physical contact between the stationary and rotating elements, employing for example a fiber optic carrier which emits energy to a photo-detector receiver attached to the rotating multibeam imaging unit (**140**).

## Description

### BACKGROUND OF THE INVENTION

The field of the invention is the beam-scanning output of high resolution image data to film or other media as used in the graphic arts industry, and more particularly, to high resolution laser scanning imagesetters. In a beam-scanning imagesetter, a rotating source of electromagnetic radiation, typically a laser, generates a beam which is used to write image data on a medium such as photographic film, plate, or paper. In an internal drum imagesetter, for example, the writing surface is removably held to the inside of a cylindrical drum. The scanning beam rotates in the plane perpendicular to the axis parallel to the axis of the cylindrical surface to which data is to be written, hereinafter referred to as the "scanning axis", and is moved on a carriage along the scanning axis from one end of the writing surface to the other. In the case of a flat-field scanning imagesetter, the writing surface is a flat surface, and the scanning beam rotates in the plane perpendicular to that surface, with the "scanning axis" determined by the relative motion between the scanner and writing medium.

In either of the foregoing two configurations, beam scanning produces a set of equally-spaced scans of data on the writing surface. The direction parallel to a line of data is often referred to as the "fast-scan axis", and the direction corresponding to the scanning axis is often referred to as the "slow-scan axis". In a typical configuration, a single image source such as a laser diode is mounted so as to emit a beam along the scanning axis, which is then directed by an rotating optical deflector such as a mirror or pentaprism in the direction of the writing surface.

The data written to the output medium is the digital representation of continuos tone images, tints, degradés, line art and other graphics typically rendered as an array of binary (on/off) values ultimately corresponding to the presence or absence of color in an output image. In offset printing, for example, the binary values determine the presence or absence of ink, and are often referred to for convenience as "black" or "white". The spacing of the black or white "spots" in the output is the resolution of the output device, typically 2400 dots per inch or higher according to current technology.

With increasing resolution, the amount of data, i.e., the number of spots which must be transmitted and written to the writing surface increases quadratically, leading to an inevitable tradeoff between resolution and the data throughput rate. Accordingly, recent advances in the state of the art have been aimed at increased performance of imagesetters at the high resolutions used for quality output. The rotation rate of the beam scanner, together with the spot sin of the laser image on the output medium and the rate of motion along the scanning axis determine the effective resolution of the data on the output medium. The data throughput rate for a single-beam scanning system, therefore, is dependent upon the rate at which the optical deflector can be rotated. Rotation rates in excess of 10,000 RPM are used in current technology, with a limiting rate ultimately determined by the enormous internal stresses on the rotating components. To achieve increases beyond this limit, multiple beams must be used.

The use of a stationary configuration of multiple image sources for "multibeam scanning" has been considered in the prior art. There are significant problems with such a configuration, however, due to the fact that multiply-projected beams cross at 180° deflection points, resulting in image traces which are not parallel. An example of a multibeam scanning system using a stationary configuration of laser image sources in an internal drum imagesetter may be seen in U.S. Pat. No. 5,026,133, issued to Roddy et al. The system uses a pentaprism for the optical deflector as a means for eliminating wobble and wavelength sensitivity effects. The configuration,'while effective in the above objectives, does not eliminate the crossing of beams.

Another approach to the problem, aimed at use of multiple stationary sources without beam crossing, is the use of additional optical elements within the path of the scanned beams, as for example in U.S. Pat. No. 5,097,351, issued to Kramer. In this system, a single laser source is used with a system of elements allowing two orthogonally polarized beams to be scanned as parallel lines of image data on the writing surface, without crossing of beams. The system as proposed is limited to a dual beam configuration, and carries with it the added complexity of the optical system.

It is therefore a general object of the invention to increase the throughput performance of beam-scanning imagesetters.

It is a specific object of the invention to increase the throughput performance of beam-scanning imagesetters through scanning of simultaneously imaging multiple beams.

It is a further specific object of the invention to achieve multibeam scanning without the crossing of the projected beams.

It is a feature of the invention that the number of writing beams which can be used for multibeam scanning can be increased without added system complexity.

It is another feature of the invention that data throughput of a beam-scanning imagesetter can be increased using scanner rotation rates which are lower than those of single-beam designs.

### SUMMARY OF THE INVENTION

The invention uses an alternate approach to those described above whereby the rotating imager module actively emits light energy as opposed to passively deflecting the energy. The apparatus of the invention comprises the integration of a self-contained multibeam imaging unit with a scanner rotation unit. The multibeam imaging unit contains within it a plurality of image sources configured so as to generate, shape and direct a set of scanning beams which are used to record data to film or other writing surface. The multibeam imaging unit is rotated by the scanner rotation unit, typically comprising an electric spin motor, encoder, and other control elements. A communication link is used to provide one or more signal paths for transmission of power and/or data from the non-rotating components of the system to the rotating multibeam imaging unit for controlling the electromagnetic radiation emitted by the image sources and for control of the multibeam imaging unit. This link can be bi-directional if status information is to be returned from the multibeam imaging unit. It can be a contact link comprised of slip-rings for example, or a non-contact link such as an optical link comprised of fiber optics or other optical transmission means, a radio frequency link, or electromagnetic coupling between the fixed and moving elements.

Power required by the multibeam imaging unit for the image sources and electronic circuitry can be supplied either by a source contained within it or by an external source with power transmission to the rotating unit accomplished using a communication link as described above. A self-contained power supply within the multibeam imaging unit can include an electric power generator using the rotary motion of the multibeam imaging unit itself to convert a portion of the energy of rotation supplied by the scanner rotation unit to electric power. In addition to or as an alternative to a generator, a battery power source can be used. In the absence of a self-contained power supply within the multibeam imaging unit, power can be transferred to the rotating unit using a communication link. In the case of a battery source, such a link can be used as a recharging means, either continuously or occasionally as required.

The objects of the invention are met by the fact that a plurality of image sources is fixed within the rotating frame of reference of the multibeam imaging unit, and therefore no beam crossing can occur. The number of beams which can be simultaneously written with each revolution of the scanner rotation unit is equal to the number of image sources, and the data throughput rate is therefore multiplied by that number. Since the image sources are fixed within the rotating frame of reference, the images (i.e., the "spots") produced by them on the writing surface are also fixed with respect to that frame of reference, and therefore, the parallel nature and equality of spacing of the lines of image data written to the writing surface are determined by the mounting precision and stability of the moving components, i.e., the multibeam scanning unit and the carriage which contains it. In addition, the number of image sources is not limited except by physical sin considerations, with additional sources requiring only the addition of data channels and power, using components internal to the multibeam imaging unit or provided by a communication link as appropriate. Finally, the ability to use a larger number of image sources means that higher data rates can be achieved with substantially lower scanner rotation rates, thereby reducing the internal stress-related problems inherent in single-beam designs.

In a preferred embodiment of the invention, the multibeam scanning system integrates a power generator, power converter and regulator circuits, electric spin motor, fiber optic data link, data processor/ sequencer/ driver circuits and a laser diode array. The spin motor rotates the multibeam imaging unit creating the fast scan axis as well as the power needed to operate the imager circuits and laser diode array. The information containing both commands and imaging data is optically coupled to the module and fiber-optically routed to the data conversion circuit in the multibeam imaging unit. The data is processed, and then sent to the laser diode array in the proper sequence to form the images on the media in the drum.

### BRIEF DESCRIPTION OF THE DRAWINGS

The objects and features of the invention will best be understood from a detailed description of the invention and a preferred embodiment thereof selected for the purposes of illustration and shown in the accompanying drawings in which:
**FIG. 1** shows a perspective view of an overall system context for an internal drum beam-scanning imagesetter embodiment of the invention;
**FIG. 2** shows a perspective view of an overall system context for a flat-field beam-scanning imagesetter embodiment of the invention;
**FIG. 3** shows a system level block diagram of the apparatus of the invention;
**FIG. 4A** shows a scanner rotation unit configuration having a spin motor with rotating armature;
**FIG. 4B** show an alternate scanner rotation unit configuration having a spin motor with stationary armature;
**FIG. 5A** and **FIG. 5B** show configurations of a multibeam imaging unit with image sources perpendicular and parallel to the scanning axis, respectively;
**FIG. 6A** shows a multibeam imaging unit wherein power is supplied internally by a battery;
**FIG. 6B** shows a multibeam imaging unit wherein power is supplied internally by an electric generator driven by the rotation of the multibeam imaging unit;
**FIG. 7A** and **FIG. 7B** show examples of contact and non-contact communication links, respectively;
**FIG. 8A** shows a non-contact communication link employing radio transmission;
**FIG. 8B** shows a non-contact communication link employing electromagnetic coupling between stationary and rotating elements of an electric generator power supply; and,
**FIG. 9** shows a cross-sectional view of a preferred embodiment of the invention.

### DETAILED DESCRIPTION OF THE INVENTION

The apparatus of the invention and variations to embodiments will now be discussed in detail, followed by description of a preferred embodiment. As an aid to understanding the discussion to follow, the terms defined herein apply to the following text, drawings, and claims, and are indicated by small capitalization. The application context of the apparatus of the invention is data output by a scanning device such as a beam-scanning imagesetter. The WRITING SURFACE shall refer to the surface on which an image is formed by the scanned output data. For an internal drum imagesetter, for example, the WRITING SURFACE comprises at least a segment of a cylindrical surface, having a cylindrical axis coincident with that about which output scanning takes place. For a flat-field scanning imagesetter, the WRITING SURFACE comprises a flat surface.

The axis along which the scanning motion takes place (i.e., the "slow-scan axis") is hereinafter referred to as the SCANNING AXIS, which, for an internal drum imagesetter is coincident with the axis of the cylindrical axis of the WRITING SURFACE. For a flat-field scanning imagesetter, the SCANNING AXIS is parallel to the WRITING SURFACE, and corresponds to the direction in which the beam scanner is moved relative to a fixed WRITING SURFACE, or to which the WRITING SURFACE is moved relative to a fixed beam scanner.

IMAGE DATA comprises the information written to a WRITING SURFACE. For output devices such as imagesetters, IMAGE DATA comprises a sequence of exposure values each of which corresponds to a single resolution element of the output device, and each of which produces a localized intensity value in the media of the WRITING SURFACE determined by the reproduction process associated with the output device (e.g, photo-chemical, thermal, or xerographic, etc.). In offset printing, the exposures produce intensity values which are either "on" or "off', and which are ultimately used to indicate the presence or absence of color (e.g., "black" or "white") in the output image. For systems with continuous tone output, the exposures can take on a continuous range of values.

A WRITING BEAM is a beam of electromagnetic radiation, such as the output of a laser diode, shaped and directed to a WRITING SURFACE for output of IMAGE DATA to that WRITING SURFACE.

MULTIBEAM SCANNING comprises the output of data to a WRITING SURFACE by simultaneous scanning of the WRITING SURFACE by a plurality of WRITING BEAMS such as to generate parallel lines of IMAGE DATA on the WRITING SURFACE. A SCANNER ROTATION UNIT comprises the means for rotating a source of WRITING BEAMS to be used in MULTIBEAM SCANNING for writing IMAGE DATA to a WRITING SURFACE about the SCANNING AXIS of that WRITING SURFACE. In MULTIBEAM SCANNING in a beam-scanning imagesetter, the SCANNER ROTATION UNIT is typically an electric motor in combination with an encoder assembly used for time-synchronization within the system.

An IMAGE SOURCE is a source of electromagnetic radiation, such as a light source, which generates a WRITING BEAM for use in writing IMAGE DATA to a WRITING SURFACE. An IMAGE SOURCE can be a coherent light source such as a laser diode, or incoherent light source such as a thermal source (e.g., incandescent lamp). An OPTICAL DEFLECTOR is an element placed so as to change the direction of the WRITING BEAMS generated by IMAGE SOURCES, thereby causing them to be deflected towards a WRITING SURFACE.

As used herein, a COMMUNICATION LINK is a means for transmission of power or data such that power or data can be transferred from a transmitter to a receiver A COMMUNICATION LINK comprises one or more SIGNAL PATHS, where a SIGNAL PATH is defined as a means for transmission of power or data as a single time-varying signal (capable of being represented as the time-varying output of a voltage-measurement device). This signal can be used to convey electric power, analog data as a continuous range of values, or digital data in analog form (i.e., as a discrete set of analog values). A combination of data and power-transmission channels can be accommodated within a single SIGNAL PATH through the use of mutiplexing.

In terms of the definitions above, a MULTIBEAM IMAGING UNIT can be defined as self-contained enclosure rotatably mounted and coupled to a SCANNER ROTATION UNIT, and comprises:
1. A plurality of image sources mounted such as to produce writing beams for output of IMAGE DATA to a WRITING SURFACE; and,
2. Means for receiving and using signals from one or more SIGNAL PATHS of a COMMUNICATION LINK for controlling the electromagnetic radiation emitted by the IMAGE SOURCES and for controlling the MULTIBEAM IMAGING UNIT.

Power required by the MULTIBEAM IMAGING UNIT for operation of the IMAGE SOURCES and control circuitry can be supplied either by a source contained within the MULTIBEAM IMAGING UNIT, or by a source external to it with power transmission accomplished using the COMMUNICATION LINK. In addition, the COMMUNICATION LINK can optionally be used bi-directionally to provide both control of the IMAGE SOURCES and to return status information from the MULTIBEAM IMAGING UNIT.

In terms of the above definitions therefore, the invention can be summarized as an apparatus for MULTIBEAM SCANNING for output of IMAGE DATA to a WRITING SURFACE, comprising the following:
1. A SCANNER ROTATION UNIT;
2. A COMMUNICATION LINK; and,
3. A MULTIBEAM IMAGING UNIT coupled to said COMMUNICATION LINK, and rotatably coupled to and rotated by said SCANNER ROTATION UNIT.

### Multibeam Scanning System Overview

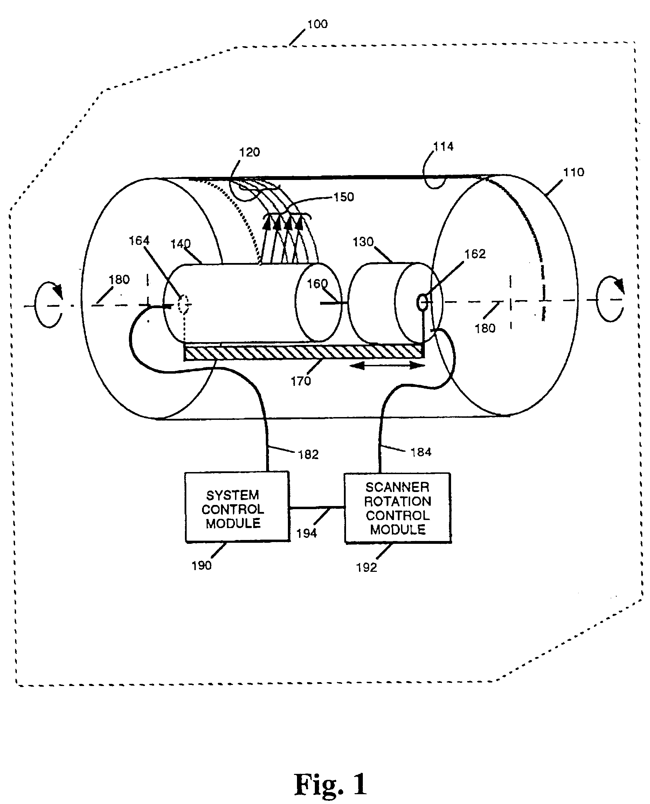

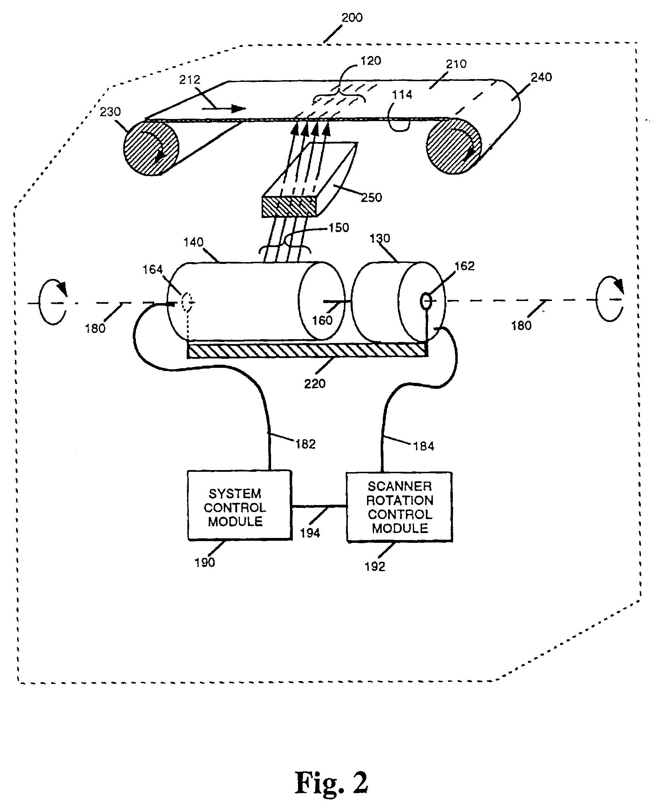

Turning now to **FIG. 1** and **FIG. 2**, the invention will now be further described using the terms defined above. The drawings show two of a number of possible configurations which illustrate the application context of the apparatus of the invention in its most general form. In **FIG. 1**, an internal drum imagesetter (**100**) uses a multibeam scanning system to write data to a recording medium such as film, fixed within a stationary internal drum (**110**), and comprising a cylindrical surface to which the imaging data (**120**) is written as a result of scanning.

The SCANNER ROTATION UNIT (**130**) drives the rotating MULTIBEAM IMAGING UNIT (**140**) thereby recording multiple WRITING BEAMS (**150**) on WRITING SURFACE (**114**). The SCANNER ROTATION UNIT (**130**) and MULTIBEAM IMAGING UNIT (**140**) are coupled by shaft (**160**) and suspended by a configuration of bearings as shown for example in **FIG. 1** with reference numbers (**162**) and **164**), fixed to a movable carriage (**170**). The carriage (**170**) is moved by a carriage drive mechanism (not shown) in a direction parallel to the SCANNING AXIS (**180**), i.e., to the axis of the cylindrical WRITING SURFACE (**114**) at a rate which causes the entire surface to be written with equally spaced scans of data. Typically, a COMMUNICATION LINK (**182**) is arranged for communication of information from electronic components in the stationary frame of reference to the rotating MULTIBEAM IMAGING UNIT (**140**), for data modulation of WRITING BEAMS (**150**), and for control of and /or supply of power to the MULTIBEAM IMAGING UNIT (**140**).

**FIG. 2** shows a second application context for the invention in general form. A flat-field beam-scanning imagesetter (**200**) uses a multibeam scanning system to write data to a recording medium (**210**) having a WRITING SURFACE (**114**) which is removably held in a plane parallel to SCANNING AXIS (**180**). In the drawing, the MULTIBEAM IMAGING UNIT (**140**) remains fixed to frame of reference (**120**) as the recording medium (**210**) is moved in the direction (**212**) from a film supply roll (**230**) to a film take-up roll (**240**). An F-theta lens (**250**) is used to focus WRITING BEAMS (**150**) on WRITING SURFACE (**114**) thereby tracing parallel lines (**120**) along the WRITING SURFACE (**114**). All other components of the system of **FIG. 2** are functionally equivalent to those of **FIG. 1**.

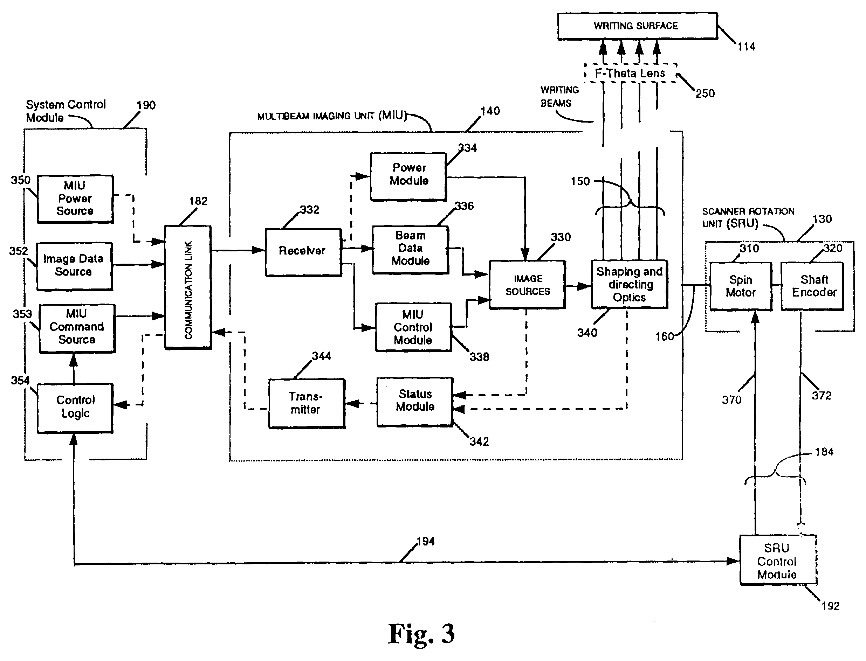

**FIG. 3** shows a system level block diagram of the apparatus of **FIG. 1**. The SCANNER ROTATION UNIT (**130**) includes a spin motor (**310**) and encoder (**320**), rotatably coupled by shaft (**160**) to MULTIBEAM IMAGING UNIT (**140**). The MULTIBEAM IMAGING UNIT (**140**) contains the IMAGES SOURCES (**330**) together with shaping and directing optics (**340**) used to generate the WRITING BEAMS (**120**) which are directed toward WRITING SURFACE (**114**) (and focused by F-theta lens (**250**) if the configuration of **FIG. 2** is being used). Means for receiving and using signals from COMMUNICATION LINK (**182**) for controlling IMAGE SOURCES (**330**) include beam data module (**336**), MIU control module (**338**) coupled to COMMUNICATION LINK (**182**) using receiver (**332**). A power module (**334**) provides power to the IMAGE SOURCES (**330**) as well as the other components of the MULTIBEAM IMAGING UNIT (**140**). The power module (**334**) can be comprised of an internal power supply such as a battery or generator driven by the rotation of SCANNER ROTATION UNIT (**130**), or can receive power through COMMUNICATION LINK (**182**) using receiver (**332**) shown by dashed link to power module (**334**).

The system control module (**190**) provides signals through COMMUNICATION LINK (**182**) for use by MULTIBEAM IMAGING via (**140**). These signals are provided by image data source (**352**) which provides the data to beam data module (**336**) for modulation of IMAGE SOURCES (**330**), MIU command source (**353**) which provides control information for IMAGE SOURCES (**330**) and other components of the MULTIBEAM IMAGING UNIT (**140**), and, if power is received from an external source through COMMUNICATION LINK (**182**), an MIU power source (**350**) which provides power for use by power module (**334**).

Control of the SCANNER ROTATION UNIT (**130**) is accomplished by SRU Control Module (**192**, which provides power (**370**) to the spin motor and receives synchronization information (**372**) from encoder (**320**) through line (**184**). Overall control of the system operation is provided by control logic (**354**) of system control module (**190**), using MIU Command source module (**353**) and SRU control module (**192**) through line (**194**).

If the COMMUNICATION LINK (**182**) is implemented as a bi-directional link, control logic (**354**) can receive status information from the MULTIBEAM IMAGING UNIT (**140**). The state of IMAGE SOURCES (**330**), the shaping and directing optics (**340**) and other information can be monitored by status module (**342**) and transmitted by transmitter (**344**) through COMMUNICATION LINK (**182**) to control logic (**354**). It should be noted that, although bi-directional communications between the MULTIBEAM IMAGING UNIT (**140**) and the system control module (**190**) can provide enhanced operation through feedback of status information, it is not essential to the operation of the apparatus of the invention.

The principal components of the apparatus of the invention, the SCANNER ROTATION UNIT (**130**), the MULTIBEAM IMAGING UNIT (**140**) and the COMMUNICATION LINK (**180**), will now be described in the drawings and the discussion to follow.

### Scanner Rotation Unit

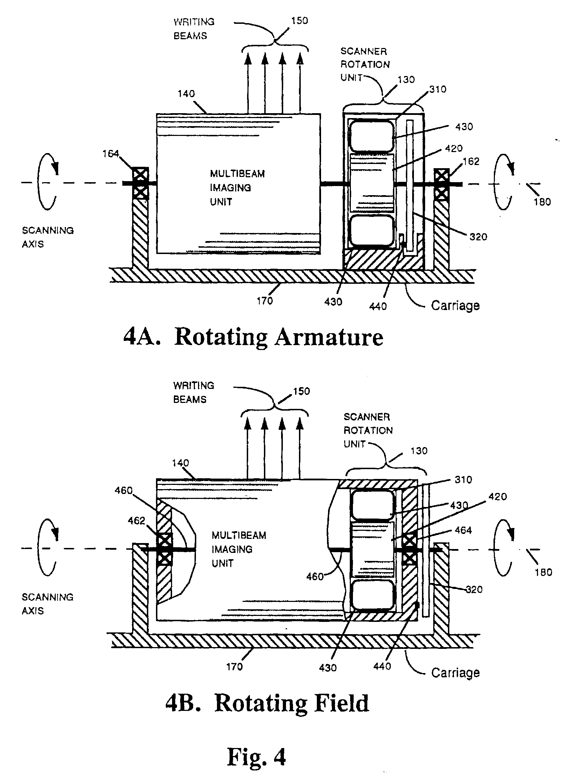

**FIG. 4A** and **FIG. 4B** show two possible configurations of components comprising the SCANNER ROTATION UNIT (**130**). In **FIG. 4A**, an electric motor (**310**) (commonly referred to as a "spin motor') contains a rotating armature (**420**) and fixed field (**430**). The armature (**420**) rotates shaft (**160**) suspended on bearings (**162**) and (**164**) within the fixed field (**430**) surrounding it, thereby rotating the MULTIBEAM IMAGING UNIT (**140**) about the SCANNING AXIS (**180**. An encoder disc (**320**) fixed to shaft (**160**) is used with a sensing device (**440**) to determine the exact position of the WRITING BEAMS (**150**) as a function of time, for synchronization of system functions.

The configuration of **FIG. 4B** shows an alternate configuration, in which the SCANNER ROTATION UNIT (**130**) is integrated within the MULTIBEAM IMAGING UNIT (**140**), with the integrated assembly rotated about a fixed shaft (**460**) by spin motor (**410**) with armature (**420**) fixed to fixed shaft (**460**), suspended on bearings (**462**) and (**464**) which are fixed in MULTIBEAM IMAGING UNIT (**140**). As shown in the drawing, encoder (**320**) is fixed with respect to the non-rotating shaft (**160**), but it can also be located within the rotating MULTIBEAM IMAGING UNIT (**140**). For the purpose of the discussion to follow, the configuration of **FIG. 4A** is assumed, although it will be clear to one skilled in the art that of **FIG. 4B** is entirely equivalent.

### Multibeam Imaging Unit

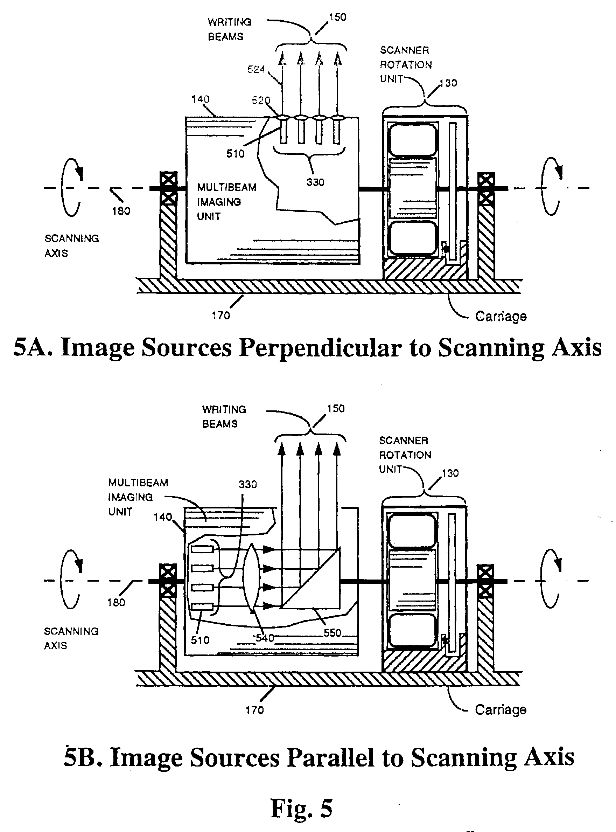

**FIG. 5A** and **FIG. 5B** show two possible configurations of IMAGE SOURCES (**330**) and shaping and directing optics (**340**) of FIG. 3. In **FIG. 5A**, a plurality of laser diodes (**510**) is mounted perpendicular to SCANNING AXIS (**180**), with each of the laser diodes (**510**) having a focusing lens (**520)** for shaping the WRITING BEAM (**524**) emitted therefrom such that the set of WRITING BEAMS (**120**) are directed as required. In **FIG. 5B**, a plurality of laser diodes (**510**) is mounted parallel to SCANNING AXIS (**180**) with the light beams emitted therefrom shaped by lens (**540**) and redirected by OPTICAL DEFLECTOR (**550**), shown in **FIG. 5B** as a simple deflection mirror, so as to form the set of properly directed WRITING BEAMS (**120**).

### Internal Power Sources

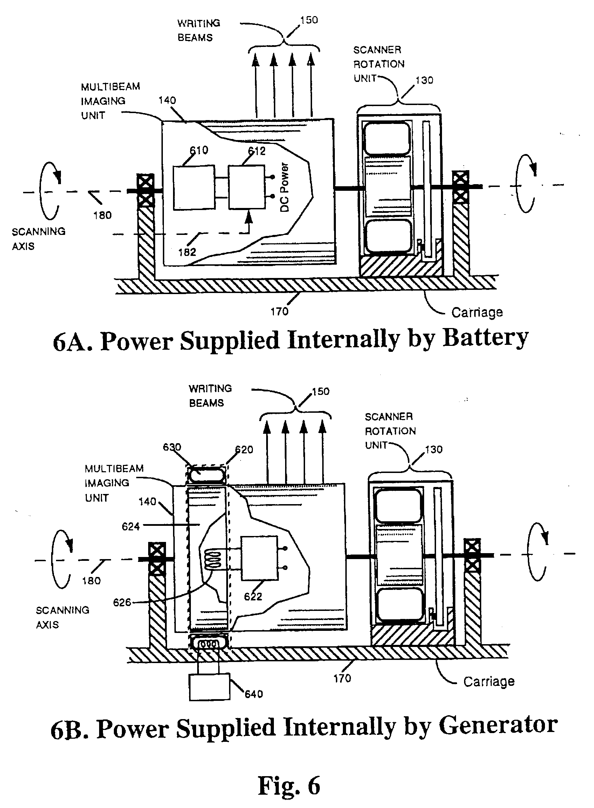

**FIG. 6A** and **FIG. 6B** show two possible implementations of power module (**334**) of **FIG. 3**, using internally supplied power. In **FIG. 6A**, a battery (**610**) is used to supply power. The battery can be charged using COMMUNICATION LINK (**182**) under control of power circuitry (**612**) within the MULTIBEAM IMAGING UNIT (**140**). In **FIG. 6B**, a generator (**620**) provides electric power using the rotation of the MULTIBEAM IMAGING UNIT (**140**) as a source of mechanical power. In the configuration shown, the generator armature (**624**) is fixed with respect to and rotates with MULTIBEAM IMAGING UNIT (**140**). The field (**630**) of generator **620**) is fixed with respect to carriage (**170**) (i.e., the non-rotating frame of reference). The field (**630**) can be provided by permanent magnets, electromagnets, or a combination of the above. If electromagnets are used, power to the field (**630**) is supplied by field power unit (**640**). Internal to the MULTIBEAM IMAGING UNIT (**600**), electric power is generated as the rotating armature coils (**626**) of armature (**624**) cut through the magnetic fields created by the field (**630**), generating an alternating current which is converted to direct current in power conditioning circuitry (**622**). It is noted that, as in the case of the spin motor (configuration of **FIG. 4B**), an equivalent generator can be implemented with armature (**624**) fixed to a fixed shaft, and with a field fixed in and rotating with the MULTIBEAM IMAGING UNIT (**140**). In such a case, power is generated in the coils of the moving field as they cut the magnetic field of the stationary armature.

### Communication Link

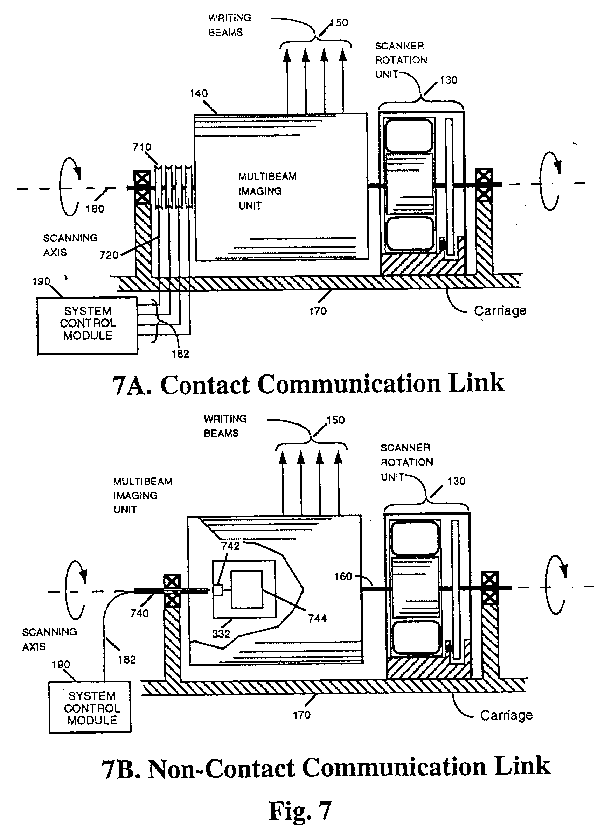

The COMMUNICATION LINK can be implemented either as a "contact" communication link or as a "non-contact" communication link, as illustrated in **FIG. 7A** and **FIG. 7B**. In the former case, signals are transferred by direct physical contact, at least part of the time, between the rotating MULTIBEAM IMAGING UNIT (**140**) and the frame of reference stationary with respect to carriage (**170**). An example, shown in **FIG. 7A** makes use of slip-rings (**710**) with physical contact made thereto by contact members (**720**). The example shows four SIGNAL PATHS comprising the COMMUNICATION LINK (**182**), corresponding to a MULTIBEAM IMAGING UNIT (**140**) producing four WRITING BEAMS (**120**). The actual number of physically separate SIGNAL PATHS can he more or less than the number of WRITING BEAMS, however, depending upon the additional information to be conveyed for control purposes, power transmission (if an external power source is to be used), and upon multiplexing of independent signals.

### Non-contact Communication Links

**FIG. 7B** shows an example of a "non-contact" communication link, in which signals are transferred without any direct physical contact between the rotating and stationary members. In the example shown, an optical link is implemented using a single fixed optical fiber (**740**) located inside the shaft (**160**) so as to convey signals from System Control Module (**190**) to receiver (**332**) mounted within the rotating MULTIBEAM IMAGING UNIT (**140**). The receiver contains an optical detector (**742**) and decoding circuitry (**744**) used for regeneration of independent signals from a-multiplexed combination. A similar arrangement can be used for bi-directional optical transmission using a light detector and a light source together with one or more optical fiber links.

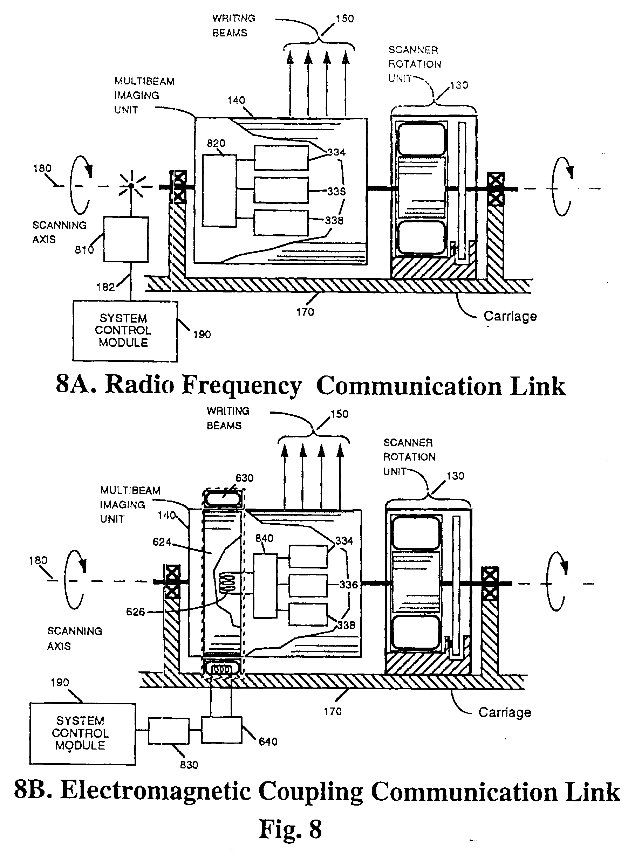

Two additional examples of non-contact communication links are shown in **FIG. 8**. In **FIG. 8A**, a link is provided between the stationary System Control Module (**190**) and the rotating MULTIBEAM IMAGING UNIT (**140**) using radio frequency transmission. Signals are transmitted by the (stationary) transmitter (**810**) and received and decoded by a radio frequency receiver (**820**) mounted inside the MULTIBEAM IMAGING UNIT (**140**). As in the previous example, a bi-directional capability can be achieved by using a transceiver instead of the receiver (**820**) shown.

In **FIG. 8B**, a non-contact link is shown which uses the electromagnetic coupling between the stationary and rotating elements of a generator power supply, such as has been discussed previously (and illustrated in **FIG. 6B**) for transmission of data, control information, and power in combination. Signals from System Control Module (**190**) are encoded in encoder unit (**830**) and used by field power source (**640**) to supply the (time-varying) electromagnetic portion of the magnetic field of stationary field (**630**). The current induced in the rotating coils (**626**) of the rotating armature (**624**) is passed through decoder (**600**) to yield the desired separated signals for power (**334**), control (**336**) and beam data (**338**). The encoding and decoding of the signals can for example make use of one or more signals at frequencies higher than that used to generate the primary alternating current in the rotating armature (**624**). The higher frequencies are then extracted in decoder (**840**) by frequency filtering means to achieve the signal separation. Bi-directional communication can be achieved using this method by generating one or more signals at frequencies distinct from those of the signals being received, supplying them to the armature coils (**626**), and detecting the corresponding signals induced in the stationary field (**630**).

### DESCRIPTION OF A PREFERRED EMBODIMENT OF THE INVENTION

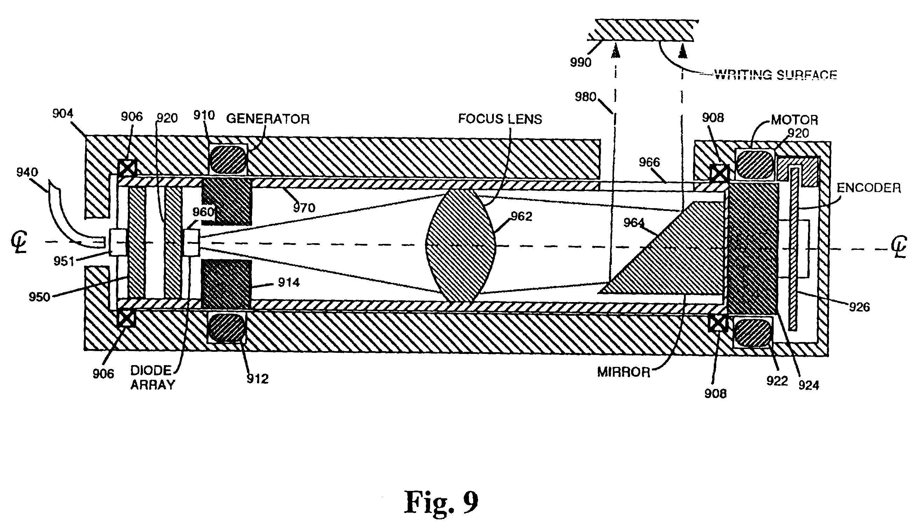

**FIG. 9** shows the major components of a self-powered MULTIBEAM IMAGING UNIT, used in a laser-scanning internal drum imagesetter, and embodying the following component configurations exemplified in the previous drawings:
1. An IMAGE SOURCE configuration emitting radiation parallel to the SCANNING AXIS and shaped by a focusing lens and redirected using an OPTICAL DEFLECTOR;
2. An internal power source making use of a generator with armature fixed in and rotating with the MULTIBEAM IMAGING UNIT; and,
3. A non-contact COMMUNICATION LINK employing a fiber optic data link.

The unit comprises six key components: a power generator (**91**0), power converter and regulator circuits (**920**), spin motor (**920**), fiber optic data link (**940**), data processor/ sequencer/ driver circuits (**950**) and laser diode array (**960**). The spin motor (**920**) rotates the MULTIBEAM IMAGING UNIT (**970**) allowing the beams (**980**) to scan WRITING SURFACE (**990**). The rotation of MULTIBEAM IMAGING UNIT (**970**) creates the power used to energize the internal circuitry (**950**) as well as the laser diode array (**960**).

The operation of these components is further detailed as follows. The rotating unit (**970**) rotates within the stationary (carriage) frame of reference (**904**), suspended on bearings (**906**) and (**908**). The spin motor (**920**) has a stationary field (**922**) and rotating armature (**924**) fixed to the rotating unit (**970**). An encoder (**926**) is also fixed to and rotates with the spin motor (**920**). The stationary portion (**912**) of the generator (**910**) is fixed to the non-rotating frame of reference (**905**) whereas the armature coils (**914**) rotate with the MULTIBEAM IMAGING UNIT (**970**). The (**912**), generating alternating currents in the armature (**914**). The alternating currents are then converted to direct current and regulated on the circuit board (**920**) inside the rotating MULTIBEAM IMAGING UNIT (**970**).

Data and command information are transmitted using a single on-axis fiber (**940**) which carries the data stream, and is coupled to a photo detector (**951**) on the imager circuit board (**950**). The information is then processed into data to drive the diode array (**960**) or for interpretation as command signals controlling the sequencing of the diodes in the laser array (**960**) as well as other events within the MULTIBEAM IMAGING UNIT (**970**). The radiation emitted by the diode array (**960**) is shaped by focusing lens (**962**) and deflected by mirror (**964**) through window (**966**), to form the WRITING BEAMS (**980**) directed toward WRITING SURFACE (**990**).

Having described in detail a preferred embodiment of our invention, it will now be apparent to those skilled in the art that numerous modifications can be made therein without departing from the scope of the invention as defined in the following claims.

## Claims

1. An apparatus for MULTIBEAM SCANNING for output of IMAGE DATA to a WRITING SURFACE (**114**), said apparatus comprising the following:
(A) A SCANNER ROTATION UNIT (**130**);
(B) A COMMUNICATION LINK (**182**); and,
(C) A MULTIBEAM IMAGING UNIT (**140**) coupled to said COMMUNICATION LINK (**182**) and rotatably coupled to and rotated by said SCANNER ROTATION UNIT (**130**).

2. The apparatus of claim 1. wherein said MULTIBEAM IMAGING UNIT (**140**) contains an internal power supply means (**334**) for supplying electric power to said MULTIBEAM IMAGING UNIT (**140**).

3. The apparatus of claim 2. wherein said power supply means (**334**) includes a rechargeable battery (**610**), and said COMMUNICATION LINK (**182**) is used at least some of the time for the purpose of charging said rechargeable battery (**610**).

4. The apparatus of claim 2. wherein said internal power supply means (**334**) includes an electric generator means (**620**) for converting a portion of the rotational energy arising from the rotation of said MULTIBEAM IMAGING UNIT (**140**) by said SCANNER ROTATION UNIT (**130**) into electric power.

5. The apparatus of claim 4. wherein said generator means (**620**) has an armature (**624**) that is stationary.

6. The apparatus of claim 4. wherein said generator means (**620**) has an armature (**624**) that is fixed with respect to and rotates with said MULTIBEAM IMAGING UNIT (**140**).

7. The apparatus of claim 4. wherein said electric generator means (**62**0) has a stationary component (**630**) and a rotating component (**624**), said stationary component (**630**) having one or more electromagnets that provide a magnetic field, and said COMMUNICATION LINK (**182**) utilizes electromagnetic coupling between said stationary component (**630**) of said electric generator means (**620**) and said rotating component (**624**) thereof.

8. The apparatus of claim 1. wherein said COMMUNICATION LINK (**182**) is coupled at least some of the time to said MULTIBEAM IMAGING UNIT (**140**) by direct physical contact (**710**) between rotating and stationary components while said MULTIBEAM IMAGING UNIT (**140**) is rotating.

9. The apparatus of claim 1. wherein said COMMUNICATION LINK (**182**) is coupled to said MULTIBEAM IMAGING UNIT (**140**) without physical contact between rotating and stationary components while said MULTIBEAM IMAGING UNIT (**140**) is rotating.

10. The apparatus of claim 9. wherein said COMMUNICATION LINK (**182**) utilizes optical data transmission means to provide at least one SIGNAL PATH.

11. The apparatus of claim 9. wherein said COMMUNICATION LINK (**182**) utilizes radio frequency data transmission (**810**) to provide at least one SIGNAL PATH.

12. The apparatus of claim 9. wherein said COMMUNICATION LINK (**182**) utilizes electromagnetic coupling to provide at least one SIGNAL PATH.

13. The apparatus of claim 1. wherein said COMMUNICATION LINK (**182**) is a bi-directional link and said MULTIBEAM IMAGING UNIT (**140**) further comprises means for transmitting signals using one or more SIGNAL PATHS of said COMMUNICATION LINK (**182**).

14. The apparatus of claim 13. wherein said signals convey status information from said MULTIBEAM IMAGING UNIT (**140**).

15. The apparatus of claim 1. wherein at least one SIGNAL PATH of said COMMUNICATION LINK (**182**) conveys data for modulation of at least one of said plurality of IMAGE SOURCES (**330**).

16. The apparatus of claim 1. wherein at least one SIGNAL PATH of said COMMUNICATION LINK (**182**) conveys control information for control of said MULTIBEAM IMAGING UNIT (**140**).

17. The apparatus of claim 1. wherein at least one SIGNAL PATH of said COMMUNICATION LINK (**182**) provides electric power to said MULTIBEAM IMAGING UNIT (**140**).

18. The apparatus of claim 1. wherein at least one SIGNAL PATH of said COMMUNICATION LINK (**182**) conveys data for modulation of at least one of said plurality of IMAGE SOURCES (**330**) in combination with control information for control of said MULTIBEAM IMAGING UNIT (**140**), said combination being organized according to a multiplexing scheme.

19. The apparatus of claim 1. wherein at least one SIGNAL PATH of said COMMUNICATION LINK (**182**) conveys data in combination with electric power to said MULTIBEAM IMAGING UNIT (**140**), said combination being organized according to a multiplexing scheme.

20. The apparatus of claim 1. wherein at least one SIGNAL PATH of said COMMUNICATION LINK (**182**) provides electric power to said MULTIBEAM IMAGING UNIT (**140**) in combination with control information for control of said MULTIBEAM IMAGING UNIT (**140**), said combination being organized according to a multiplexing scheme.

21. The apparatus of claim 1. wherein at least one of a plurality of IMAGE SOURCES (**330**) contained in said MULTIBEAM IMAGING UNIT is a coherent source.

22. The apparatus of claim 1. wherein at least one of a plurality of IMAGE SOURCES (**330**) contained in said MULTIBEAM IMAGING UNIT (**140**) is configured such that the one or more WRITING BEAMS (**150**) generated by said at least one of a plurality of IMAGE SOURCES (**330**) are initially emitted in a direction parallel to said SCANNING AXIS (**180**), and wherein said MULTIBEAM IMAGING UNIT (**140**) includes an OPTICAL DEFLECTOR (**550**) configured such that said WRITING BEAMS (**150**) are deflected in directions which trace a number of parallel lines (**120**) on a WRITING SURFACE (**114**) with each revolution of said MULTIBEAM IMAGING UNIT (**140**) about said SCANNING AXIS (**180**), said number being equal to the number of said plurality of IMAGE SOURCES (**330**).

23. The apparatus of claim 1. wherein at least one of a plurality of IMAGE SOURCES (**330**) contained in said MULTIBEAM IMAGING UNIT (**140**) is configured such the WRITING BEAMS (**150**) generated by said at least one of a plurality of IMAGE SOURCES (**330**) are initially emitted in a direction perpendicular to the axis of rotation (**180**) of said MULTIBEAM IMAGING UNIT (**140**), thereby tracing a number of parallel lines (**120**) on said WRITING SURFACE (**114**) with each revolution of said MULTIBEAM IMAGING UNIT (**140**) about said SCANNING AXIS (**180**), said number being equal to the number of said plurality of IMAGE SOURCES (**330**).

24. The apparatus of claim 1. wherein said MULTIBEAM IMAGING UNIT (**140**) includes at least one focusing lens (**962**).

25. An imagesetter (**100**) for plural beam scanning of an electromagnetic radiation responsive media, said imagesetter (**100**) comprising:
(A) An internal drum means (**110**) for removably holding said electromagnetic radiation responsive media (**114**), said internal drum means (**110**) having an interior surface in the form of at least a segment of a cylinder with a longitudinal axis (**180**) and with said electromagnetic radiation responsive media (**114**) being removably held against said interior surface;
(B) A plurality of electromagnetic radiation beam emitter means (**140**) for impinging upon said electromagnetic radiation responsive media a corresponding plurality of electromagnetic radiation beams (**150**), said electromagnetic radiation beams (**150**) being spaced apart upon impingement with said electromagnetic radiation responsive media (**114**);
(C) Rotation means (**130**) for rotating said plurality of electromagnetic radiation beam emitter means (**140**) about said longitudinal axis (**180**);
(D) Means for moving said plurality of electromagnetic radiation beam emitter means (**140**) along said longitudinal axis (**180**); and,
(E) Control means (**190**) for controlling the electromagnetic radiation emitted (**150**) by said electromagnetic radiation beam emitter means (**140**).

26. An imagesetter (**200**) for plural beam scanning of an electromagnetic radiation responsive media (**114**), said imagesetter (**200**) comprising:
(A) Means for removably holding said electromagnetic radiation responsive media (**114**);
(B) A plurality of electromagnetic radiation beam emitter means (**140**) for impinging upon said electromagnetic radiation responsive media (**114**) a corresponding plurality of electromagnetic radiation beams (**150**), said electromagnetic radiation beams (**150**) being spaced apart upon impingement with said electromagnetic radiation responsive media (**114**);
(C) Rotation means (**130**) for rotating said plurality of electromagnetic radiation beam emitter means (**140**) about a longitudinal axis (**180**);
(D) Means for relatively moving said electromagnetic radiation responsive media (**114**) with respect to said plurality of electromagnetic beam emitter means (**140**) along an axis parallel to said longitudinal axis (**180**); and,
(E) Control means (**190**) for controlling the electromagnetic radiation (**150**) emitted by said electromagnetic radiation beam emitter means (**140**).

27. The apparatus of claims 25. or 26. wherein said rotating means and said moving means operate simultaneously.

28. An apparatus for plural beam scanning an object (**114**) with electromagnetic radiation comprising:
(A) Means for positioning the object to be scanned with respect to a source of plural beams of electromagnetic radiation (**140**);
(B) Rotation means (**130**) for rotating the source of plural beams of electromagnetic radiation (**140**) about an axis (**180**) to impinge said plural beams of electromagnetic radiation (**150**) upon said object (**114**); and,
(C) Means for relatively moving the source of plural beams of electromagnetic radiation (**140**) with respect to said object.

29. The apparatus of claim 28. wherein said means for relative movement and said means for rotating the source of plural beams of electromagnetic radiation operate simultaneously.

30. The apparatus of claim 28. wherein said object (**114**) is flat.

31. The apparatus of claim 28. wherein said object (**114**) is curved.
